Europäisches Patentamt

(19) European Patent Office

Office européen des brevets

(11) Numéro de publication: **0 093 678**
**B1**

(12) **FASCICULE DE BREVET EUROPEEN**

(45) Date de publication du fascicule du brevet:
06.11.85

(51) Int. Cl.⁴: **A 61 G 17/06,** A 01 N 1/00

(21) Numéro de dépôt: 83420066.9

(22) Date de dépôt: 15.04.83

(54) Enveloppe étanche auto-destructible d'ensevelissement.

(30) Priorité: 30.04.82 FR 8207761

(43) Date de publication de la demande:
09.11.83 Bulletin 83/45

(45) Mention de la délivrance du brevet:
06.11.85 Bulletin 85/45

(84) Etats contractants désignés:
BE CH DE GB IT LI NL

(56) Documents cités:
AT - B - 341 662
DE - A - 3 014 616
FR - A - 1 399 591
FR - A - 1 401 403
FR - A - 1 490 625
FR - A - 2 483 223

(73) Titulaire: Bizet, André, 74 Boulevard des Belges,
F-69006 Lyon (FR)
Titulaire: Mouzet, Jacques, 26 Rue de Croix Cotton,
F-69890 La Tour de Salvagny (FR)
Titulaire: Tabourin, Daniel, 6 Allée de Passe-Chanin,
F-69890 La Tour de Salvagny (FR)

(72) Inventeur: Bizet, André, 74 Boulevard des Belges,
F-69006 Lyon (FR)
Inventeur: Mouzet, Jacques, 26 Rue de Croix Cotton,
F-69890 La Tour de Salvagny (FR)
Inventeur: Tabourin, Daniel, 6 Allée de Passe-Chanin,
F-69890 La Tour de Salvagny (FR)
Inventeur: Lambert, Alain, 62 Rue Bugeaud,
F-69006 Lyon (FR)

(74) Mandataire: Monnier, Guy et al, Cabinet
Monnier 150 Cours Lafayette B.P. 3058, F-69393 Lyon
Cédex 03 (FR)

# Description

La présente invention se réfère aux enveloppes étanches aux liquides, mais propres à se dégrader progressivement par la suite au sein du milieu dans lequel elles ont été placées avec leur contenu, de manière à pleinement exposer celui-ci à l'action de ce milieu. Un exemple typique d'application de telles enveloppes est la réalisation de linceuls ou housses d'inhumation qui doivent assurer l'étanchéité autour du corps pendant un laps de temps suffisant, puis se dégrader et disparaître à la longue afin que le corps puisse subir les phénomènes naturels de décomposition sous peine d'encombrement des cimetières. Mais l'invention n'est pas limitée à ce domaine particulier d'utilisation et elle est susceptible d'être mise en œuvre dans tous les cas posant des problèmes analogues, notamment quand on veut disposer de déchets organiques (ordures ménagères, débris de végétaux, etc.).

Etant donné qu'une telle enveloppe doit simultanément présenter des caractéristiques accentuées de souplesse, d'étanchéité et de résistance au déchirage, l'on a tout naturellement eu recours (cf. FR-A-1490625 et AT-B-341662) à des matières plastiques du genre du chlorure de polyvinyle, combinées, d'une part, à un support formé par une nappe de fibres naturelles ou synthétiques et, d'autre part, à un produit soluble ou décomposable de manière à être éliminé par l'humidité et détruit par les micro-organismes présents dans le sol ou sous l'effet de couples électrochimiques. Le but recherché était que la disparition de ces produits ou charges destructibles engendrerait dans le support plastifié des vides créant une perméabilité qui, notamment dans les applications funéraires, autoriserait les échanges souhaités entre le sol et le contenu de l'enveloppe.

Or les tentatives effectuées dans ce sens ont donné des résultats assez décevants. L'on a pu vérifier que la matière plastique isole le plus souvent les poudres, granules ou fibres qui forment les charges auto-destructibles, si bien que l'enveloppe reste aussi imperméable qu'indestructible. Dans d'autres cas on a pu obtenir une certaine porosité par réticulation du support plastifié, mais cette porosité est trop faible pour éviter l'effet de colmatage par les matières provenant de la lyse cadavérique ou par les produits engendrés par la décomposition du contenu de l'enveloppe, de telle sorte que par suite du maintien de son imperméabilité, cette enveloppe s'oppose aux échanges entre le sol et le contenu précité.

On notera au surplus que même si l'on parvenait à conférer à une telle enveloppe composite une perméabilité suffisante pour permettre les échanges sol/contenu et autoriser ainsi la disparition totale de ce contenu par putréfaction ou autre autodestruction, il n'en resterait pas moins que les parties plastifiées de l'enveloppe subsisteraient encore dans le sol ou sur celui-ci, avec tous les risques et gênes présentés par une telle permanence. Dans la majorité des cas il est indispensable que l'enveloppe elle-même disparaisse totalement avec son contenu initial.

Une feuille étanche particulièrement apte pour housses d'inhumation, comportant un support de nappe en fibres enduit par un agent d'étanchéité, de nature non plastique est connue du document FR-A-2483223, néanmoins l'autodestruction de cette feuille est due également aux échanges entre le sol et l'agent d'étanchéité.

La présente invention a pour objet une enveloppe d'ensevelissement remarquable en ce qu'en vue de se dispenser de la présence de matière plastique et de réduire l'importance des échanges avec le sol, elle comprend un support, réalisé à base de fibres tissées ou non tissées de nature entièrement dégradable, recouvert d'un enduit comportant une matière collante putrescible et biodégradable assurant l'imperméabilité provisoire, caractérisée en ce que ledit enduit est une solution aqueuse et en ce que ledit support renferme de l'eau provenant de l'enduit en quantité suffisante pour conférer à l'ensemble une souplesse permettant le repliage de l'enveloppe et pour engendrer l'autodestruction de la matière collante putrescible précitée.

Conformément à un mode de réalisation préféré de l'enveloppe suivant l'invention, le support dégradable est constitué par une nappe, tissée ou non tissée, de fibres de cellose sous la forme de fils plus ou moins ténus de chanvre, de lin, de coton ou de toute autre matière végétale ou animale. On peut en particulier réaliser une sorte de feutre très fin à base de fils, fibres ou poils, liés les uns aux autres par l'enduit biodégradable collant, par un dérivé de la cellulose tel que la viscose, les nitrate, acétate ou triacétate de cellulose, ou encore par un liant synthétique tel qu'une résine acrylique. Dans ce dernier cas l'on a bien affaire à une matière synthétique étanche, mais les essais ont démontré qu'après disparition du support enduit, cette résine tombe en poussière si l'on prend soin de l'employer sous forme de poudre dans une proportion maximale de 25% du poids du support avant enduction, ce qui correspond en réalité à environ 5 g/m² d'enveloppe.

Pour l'enduction du support on aura recours à des matières collantes biodégradables du genre de la caséine, des alginates ou encore des collagènes tels que la gélatine. Suivant une caractéristique particulière à ces derniers produits, l'on peut prévoir une opération de tannage afin de conférer au support une meilleure résistance à l'humidité et aux agressions bactériennes ou mécaniques; l'agent de tannage peut être le formol, le chrome, des tanins végétaux ou toute autre substance ou produit susceptible d'apporter les qualités sus-indiquées.

Bien entendu il y a lieu de faire comporter à la solution d'enduction une quantité d'eau suffisante pour que l'enveloppe obtenue soit susceptible de supporter sans dommage les pliages nécessaires à l'emballage correct du contenu. Cette eau, qui facilite en outre la putréfaction, sera avantageusement fixée par un agent hygroscopique, tel par exemple que de la glycérine ou du chlorure de sodium, de magnésium ou de calcium, propre à s'opposer efficacement à sa dessication.

Une formule de suspension d'enduction qui a donné des résultats particulièrement avantageux au cours des essais est la suivante, les pourcentages étant donnés en poids:

| | |
|---|---|
| Gélatine LP 406 à 45% d'eau | 80% |
| Glycérine | 10% |
| Dioxyde de titane Rex | 9,95% |
| Bleu d'outre-mer 1350 D | 0,05% |

Afin d'améliorer le toucher de l'enveloppe à l'état fini, on la recouvre préférablement d'une pellicule d'un vernis biodégradable, du genre par exemple de la nitrocellulose, susceptible d'être attaqué par les agents habituels de destruction des tissus végétaux et animaux. Pour conférer à cette pellicule une perméabilité à la vapeur d'eau propre à faciliter l'action des agents hygroscopiques précités, il est avantageux d'inclure à la nitrocellulose ou similaire, des cristaux de carbonate de calcium sous forme d'aragonite, de calcite ou de vatérite, ou des cristaux d'oxyde de titane, etc.; ces cristaux déterminent à la surface de la nitrocellulose des ouvertures qui engendrent la perméabilité à la vapeur d'eau tout en s'opposant au passage de tout liquide, y compris l'eau elle-même. On a pu observer que ces cristaux améliorent l'élasticité et la résistance mécanique au déchirement de l'enveloppe, et ce dans une mesure significative.

Dans ce même but des cristaux du même genre sont avantageusement incorporés à la suspension d'enduction et c'est ce qui explique la présence de dioxyde de titane dans la formule indiquée plus haut.

On donnera ci-après une formule préférée pour la suspension de pelliculage superficiel:

| | |
|---|---|
| Résine nitrocellulosique | 17% |
| Dibantilphtalate | 3% |
| Acétate d'éthyle | 75% |
| Dioxyde de titane | 5% |

Les essais ont démontré que l'enveloppe ainsi obtenue reste absolument étanche à tout liquide pendant une durée variant de 6 d à 1 mois en fonction de la température ambiante et du mode précis de fabrication. Par la suite l'enveloppe est attaquée par les bactéries, moisissures, actinomycètes et autres agents présents en nombre important dans la flore microbienne du sol et du sous-sol, lesdits agents réduisant en totalité les constituants de l'enveloppe à l'état d'humus, et ce dans un délai très court. On notera qu'en matière funéraire cette propriété est particulièrement favorable aux échanges désirables entre le sol et les tissus réductibles du corps inhumé.

Le délai de rupture d'étanchéité de l'enveloppe est susceptible d'être modifié en agissant sur l'épaisseur de la pellicule de protection: plus cette pellicule est mince, moins long est le délai.

Il convient encore d'observer que l'enveloppe suivant l'invention est parfaitement combustible et qu'elle ne dégage en brûlant aucune fumée ni gaz dangereux. On évite par ailleurs l'encrassement des parois des fours d'incinération usuels.

## Revendications

1. Enveloppe étanche dégradable d'ensevelissement, du genre comprenant un support qui est réalisé à base de fibres tissées ou non tissées de nature entièrement dégradable et recouvert d'un enduit comportant une matière collante putrescible et biodégradable assurant une imperméabilité provisoire, caractérisée en ce que ledit enduit est constitué d'une solution aqueuse et en ce que ledit support renferme de l'eau provenant de l'enduit en quantité suffisante pour conférer à l'ensemble la souplesse nécessaire à l'utilisation et pour engendrer l'auto-destruction de la matière collante d'enduction.

2. Enveloppe suivant la revendication 1, caractérisée en ce que le support est formé par une sorte de feutre très fin dont les fibres, fils ou poils constitutifs sont convenablement liés les uns aux autres.

3. Enveloppe suivant la revendication 2, caractérisée en ce que le liant est constitué par l'enduit biodégradable collant lui-même.

4. Enveloppe suivant la revendication 2, caractérisée en ce que le liant est constitué par un dérivé de la cellulose tel que la viscose ou les nitrates, acétate ou triacétate de cellulose.

5. Enveloppe suivant la revendication 2, caractérisée en ce que le liant est constitué par une résine acrylique employée sous forme de poudre dans une proportion maximale de 25% du poids du support avant enduction.

6. Enveloppe suivant l'une des revendications 1 à 5, caractérisée en ce que les collagènes utilisés à la façon en soi connue pour l'enduction du support, sont tannées.

7. Enveloppe suivant l'une des revendications 1 à 6, caractérisée en ce qu'on ajoute à l'eau de la solution d'enduction un agent hygroscopique propre à s'opposer à la dessication.

8. Enveloppe suivant la revendication 7, caractérisée en ce qu'elle est revêtue, après enduction, d'une pellicule d'un vernis biodégradable améliorant son toucher.

9. Enveloppe suivant la revendication 8, caractérisée en ce qu'on incorpore au vernis de recouvrement des cristaux propres à déterminer une perméabilité à la vapeur d'eau tout en s'opposant au passage des liquides.

## Claims

1. Degradable, water-tight burial shroud of the type comprising a support in the form of woven or non-woven fibres of a fully degradable kind and covered with a coating comprising an adhesive, corrodible and biodegradable material ensuring a temporary impermeability, characterised in that said coating consists of an aqueous solution and in that said support retains water arising from the coating in sufficient quantity to confer on the whole the flexibility necessary for use and to afford the auto-destruction of the coating adhesive material.

2. Shroud according to Claim 1, characterised in that the support is formed by a type of very fine felt of which the constituent fibres, threads or hairs are suitably bonded to each other.

3. Shroud according to Claim 2, characterised in that the bonding agent consists of the biodegradable adhesive coating itself.

4. Shroud according to Claim 2, characterised in that the bonding agent consists of a cellulose derivative such as viscose or the nitrates, acetate or triacetate of cellulose.

5. Shroud according to Claim 2, characterised in that the bonding agent consists of an acrylic resin used in powder form in a maximum proportion of 25% of the weight of the support before coating.

6. Shroud according to any one of Claims 1 to 5, characterised in that the collagens used in the manner known *per se* for coating the support, are tanned.

7. Shroud according to any one of Claims 1 to 6, characterised in that to the water of the coating solution is added a hygroscopic agent adapted to resist dessication.

8. Shroud according to Claim 7, characterised in that it is covered, after coating, with a film of a biodegradable varnish improvising its touch.

9. Shroud according to Claim 8, characterised in that in the covering varnisch are incorporated crystals adapted to impart a permeability to water vapour while resisting the passage of liquid.

## Patentansprüche

1. Undurchlässige, abbaubare Leichenhülle der Art, die einen Träger enthält, der aus gewebten oder nichtgewebten Fasern von vollständig abbaubarer Beschaffenheit als Grundbestandteil hergestellt und mit einer Schicht, die aus einem sich zersetzenden und biologisch abbaubaren Klebstoff besteht und für eine zeitweilige Undurchlässigkeit sorgt, überzogen ist, dadurch gekennzeichnet, dass die erwähnte Schicht aus einer wässerigen Lösung gebildet ist und dass der erwähnte Träger Wasser, das von der Schicht herrührt, in einer Menge enthält, die ausreicht, um dem Ganzen die für die Verwendung erforderliche Biegsamkeit zu verleihen und um die Selbstzersetzung des Beschichtungs-Klebstoffs zu verursachen.

2. Hülle nach Anspruch 1, dadurch gekennzeichnet, dass der Träger aus einer Art sehr dünnem Filz gebildet ist, wobei die Fasern, Fäden oder Haare, die den Filz bilden, in geeigneter Weise miteinander verbunden sind.

3. Hülle nach Anspruch 2, dadurch gekennzeichnet, dass das Bindemittel durch die biologisch abbaubare Klebstoffschicht selbst gebildet wird.

4. Hülle nach Anspruch 2, dadurch gekennzeichnet, dass das Bindemittel durch ein Cellulosederivat wie z. B. Viskose oder Cellulosenitrat, -acetat oder -triacetat gebildet wird.

5. Hülle nach Anspruch 2, dadurch gekennzeichnet, dass das Bindemittel durch ein Acrylharz gebildet wird, das in Pulverform in einem Höchstanteil von 25%, bezogen auf des Gewicht des Trägers vor der Beschichtung, verwendet wird.

6. Hülle nach einem der Ansprüche 1 bis 5, dadurch gekennzeichnet, dass die Kollagene, die in an sich bekannter Weise für die Beschichtung des Trägers verwendet werden, gegerbt sind.

7. Hülle nach einem der Ansprüche 1 bis 6, dadurch gekennzeichnet, dass zu dem Wasser der Beschichtungslösung ein hygroskopisches Mittel, das dazu geeignet ist, dem Austrocknen zu widerstehen, hinzugegeben wird.

8. Hülle nach Anspruch 7, dadurch gekennzeichnet, dass sie nach der Beschichtung mit einem Film aus einem biologisch abbaubaren Lack, der ihren Griff verbessert, überzogen wird.

9. Hülle nach Anspruch 8, dadurch gekennzeichnet, dass dem Überzugslack Kristalle zugesetzt werden, die geeignet sind, eine Wasserdampfdurchlässigkeit herbeizuführen, obwohl sie dem Durchgang von Flüssigkeiten widerstehen.